# EUROPÄISCHE PATENTSCHRIFT

(11) **EP 2 850 788 B1**
(45) Veröffentlichungstag und Bekanntmachung des Hinweises auf die Patenterteilung: **11.05.2016**
(21) Anmeldenummer: 13731022.3
(22) Anmeldetag: 14.05.2013
(51) Int. Cl.: H04L 12/403, H04L 12/863, H04L 12/24, H04L 12/64

(54) **VERFAHREN UND APPARAT ZUR VERMITTLUNG VON ZEITGESTEUERTEN UND EREIGNISGESTEUERTEN NACHRICHTEN**
METHOD AND APPARATUS FOR SWITCHING TIME TRIGGERED AND EVENT TRIGGERED MESSAGES
PROCÉDÉ ET ÉQUIPEMENT POUR COMMUTER DES MESSAGES À ÉCLENCHEMENT TEMPOREL ET DES MESSAGES À DÉCLENCHEMENT ÉVÈNEMENTIEL

(30) Priorität: 15.05.2012 AT 5772012
(43) Veröffentlichungstag der Anmeldung: 25.03.2015
(73) Patentinhaber: FTS Computertechnik GmbH, 1040 Wien (AT)
(72) Erfinder: ANGELOW, Harald, A-1140 Wien (AT); BAUER, Günther, A-1040 Wien (AT); STEINER, Wilfried, A-1040 Wien (AT); SCHWARZ, Martin, A-2700 Wiener Neustadt (AT)
(74) Vertreter: Patentanwaltskanzlei Matschnig & Forsthuber OG
(86) Internationale Anmeldenummer: PCT/AT2013/050107
(87) Internationale Veröffentlichungsnummer: WO 2013/170285

(56) Entgegenhaltungen:
- EP-A2- 0 996 256
- WO-A1-03/107609
- US-A1- 2002 087 723
- US-A1- 2007 083 622

## Beschreibung

Die Erfindung betrifft ein Verfahren zur Verteilung von ereignisgesteuerten (ET-) und zeitgesteuerten (TT-) Nachrichten in einem verteilten Echtzeitsystem mittels einer Verteilereinheit, die eine Low-Level Vermittlungseinheit (LLVME) und eine High-Level Vermittlungseinheit (HLVME) beinhaltet, wobei Kommunikations-Ports der Verteilereinheit zu anderen Vermittlungseinheiten und/oder Endsystemen des Echtzeitsystems an die LLVME angeschlossen sind.

Weiters betrifft die Erfindung eine Verteilereinheit zur Verteilung von ereignisgesteuerten (ET-) und zeitgesteuerten (TT-) Nachrichten in einem verteilten Echtzeitsystem, wobei die Verteilereinheit eine Low-Level Vermittlungseinheit (LLVME) und eine High-Level Vermittlungseinheit (HLVME) beinhaltet, wobei Kommunikations-Ports der Verteilereinheit zu anderen Vermittlungseinheiten und/oder Endsystemen des Echtzeitsystems an die LLVME angeschlossen sind.

Weiters betrifft die Erfindung noch ein verteiltes Echtzeitsystem mit zumindest einer, z.B. genau einer solchen Verteilereinheit.

Die vorliegende Erfindung liegt im Bereich der Computertechnik. Sie beschreibt ein innovatives Verfahren, wie in einem verteilten Echtzeitsystem ereignisgesteuerte und zeitgesteuerte Nachrichten vermittelt werden können.

In verteilten Echtzeitsystemen können die geforderten Zeitbedingungen zwischen den Sensoreingaben von einem technischen Prozess und den Ausgaben an die Stellglieder des technischen Prozesses genau eingehalten werden, wenn die Kommunikation zwischen den Rechnerknoten des verteilten Echtzeitsystems zeitgesteuert abläuft [1]. In den vorherrschenden nicht zeitkritischen Kommunikationssystemen, z.B. in Ethernet, wird die Kommunikation entsprechend dem ereignisgesteuerten Ansatz durchgeführt.

Dokument WO 03/107609 A1 offenbart das Präambel der unabhängigen Ansprüche. Weitere Dokumente US 2007/083622 A1, US 2002/087723 A1 und EP 0 996 256 A2 sind auch relevant.

Es ist eine Aufgabe der vorliegenden Erfindung, eine Lösung dafür anzugeben, wie eine bestehende ereignisgesteuerte Nachrichtenverteilereinheit kostengünstig erweitert werden kann, um auch zeitgesteuerte Nachrichten zu vermitteln.

Diese Aufgabe wird durch ein Verfahren gemäß Anspruchs 1 und durch eine Verteilereinheit gemäß Anspruchs 10 gelöst. Die abhängigen Ansprüche geben Definitionen von Ausführungsbeispiele. Entsprechend wird die Aufgabe mit einem eingangs genannten Verfahren sowie mit einer eingangs erwähnten Verteilereinheit dadurch gelöst, dass erfindungsgemäß die LLVME über den Zugriff auf eine globale Zeitbasis verfügt und dazu eingerichtet ist, zwischen ET-Nachrichten und TT-Nachrichten zu unterscheiden, wobei die LLVME eine auf einem ihrer Ports eintreffende ET-Nachricht an die HLVME weiter leitet, so dass die HLVME die Analyse und zeitliche Einplanung der ET-Nachricht vornehmen kann, bevor sie diese ET-Nachricht wieder an die LLVME zur Ausgabe an die designierten Ausgangsports der LLVME übergibt, und wobei die LLVME, insbesondere rechtzeitig, vor der ihr bekannten Ausgabe einer TT-Nachricht einen *Pauseframe* an die HLVME sendet, so dass während des für die TT-Nachricht vorab bekannten und eingeplanten Sendeslot von der HLVME die Übertragung keiner ET-Nachricht eingeplant wird, und wobei die LLVME eine eintreffende TT-Nachricht entsprechend dem ihr bekannten Zeitplan direkt zur Ausgabe an die designierten Ausgangsports übergibt.

Erfindungsgemäß wird also angenommen, dass eine Nachrichtenverteilereinheit aus zwei Subsystem besteht, einer Low-Level Vermittlungseinheit (LLVME), die über eine globale Zeit verfügt, und einer high-level Vermittlungseinheit (HLVME), die keinen Zugriff auf eine globale Zeit haben muss und ereignisgesteuerte Nachrichten vermitteln kann. Die LLVME enthält die Kommunikations-Ports, über die die Endsysteme (Rechnerknoten) oder weitere Nachrichtenverteilereinheiten angeschlossen sind. Eine über einen Kommunikations-Port der LLVME eintreffende Nachricht wird in der LLVME analysiert um festzustellen, ob die Nachricht der Klasse der ereignisgesteuerten oder der Klasse der zeitgesteuerten Nachrichten angehört. Eine ereignisgesteuerte Nachricht wird der HLVME zur Vermittlung weitergeleitet. Die HLVME untersucht die Nachricht und entscheidet unter Berücksichtigung des gegenwärtigen Nachrichtenverkehrs, zu welchem Zeitpunkt die Nachricht von der HLVME an die LLVME zur Ausgabe an den designierten Ausgangsport der LLVME übergeben wird. Eine zeitgesteuerte Nachricht wird von der LLVME direkt an den designierten Ausgangsport entsprechend dem in der LLVME gespeicherten Zeitplan für zeitgesteuerte Nachrichten geleitet. Um sicherzustellen, dass der designierte Ausgangsport zum *a priori* bekannten Sendezeitpunkt der zeitgesteuerten Nachricht nicht von einer ereignisgesteuerten Nachricht belegt ist, sendet die LLVME rechtzeitig einen Pauseframe an die HLVME, so dass die HLVME den Ausgangsport zum Zeitpunkt der Übertragung der zeitgesteuerten Nachricht nicht verplant.

Im folgenden werden einige weitere Begriffe, die in dem vorliegenden Dokument verwendet werden, erklärt. Eine Nachricht ist zeitgesteuert (time-triggered (TT) message), wenn der Sendezeitpunkt der periodischen Nachricht in einem *a priori* bekannten Zeitplan festgelegt ist. Eine Nachricht ist ereignisgesteuert (event-triggered (ET) message), wenn der Sendezeitpunkt der Nachricht nach dem best-effort [4, S. 175] Prinzip festgelegt wird. Ein Pauseframe ist eine Nachricht, die von der LLVME an die HLVME gesendet wird um der HLVME mitzuteilen, dass während des in dem Pauseframe angegebenen Zeitintervalls keine weitere Nachrichten an die LLVME zur Vermittlung gesendet werden dürfen. Das Zeitintervall zwischen dem Senden des Pauseframes durch die LLVME und dem spätesten Beginn der Pause wird als *Aktivierungsjitter* bezeichnet. Um sicherzustellen, dass der designierte Ausgangsport der LLVME zum *a priori* bekannten Sendezeitpunkt einer zeitgesteuerten Nachricht frei ist, muss das Intervall zwischen dem Senden der *Pauseframe* von der LLVME an die HLVME und dem geplanten Sendezeitpunkt der Nachricht dem *Aktivieruvgsjitter* entsprechen.

Da die Struktur und Funktion des Pauseframes im IEEE Standard 802.3 für Ethernet Nachrichten spezifiziert ist, ermöglicht die vorliegende Erfindung bestehende, dem IEEE Standard entsprechende, Ethernet-Nachrichten-Verteilereinheiten für Ereignisnachrichten kostengünstig durch das Hinzufügen einer LLVME zur Übertragung von zeitgesteuerten Nachrichten zu erweitern ohne in der bestehenden Ethernet-Nachrichten-Verteilereinheit Änderungen durchführen zu müssen. Da einige der bestehenden Nachrichtenverteilereinheiten in einem ASIC implementiert sind und Änderungen in einem ASIC einen hohen Kostenaufwand verursachen, ist die Erfindung von großer wirtschaftlicher Bedeutung.

Die Unterteilung einer Nachrichtenverteilereinheit in zwei hierarchisch angeordnete Subsysteme, wobei das untere Subsystem die unmittelbare Vermittlung durchführt und das überlagerte Subsystem entscheidet, in welcher Reihenfolge die Nachrichten vermittelt werden sollen, ist bereits Stand der Technik und wird u.a. in [3] beschrieben. Allerdings liefert der Stand der Technik keine Informationen, die den erfindungsgemäß vorgeschlagenen Lösungsansatz zur Integration von zeitgesteuerter und ereignisgesteuerter Nachrichtenvermittlung nahelegen.

Die vorliegend beschriebene Erfindung legt somit ein Verfahren offen, wie eine bestehende Nachrichtenverteilereinheit für ereignisgesteuerte Nachrichten (z.B. für Ethernet Nachrichten) erweitert werden kann, um auch zeitgesteuerte Nachrichten zu vermitteln. Erfindungsgemäß wird der bestehenden Nachrichtenverteilereinheit eine Low-Level Vermittlungseinheit vorgeschaltet, die die Vermittlung der zeitgesteuerten Nachrichten vornimmt und sicherstellt, dass zum *a priori* geplanten Sendezeitpunkt der zeitgesteuerten Nachricht keine ereignisgesteuerte Nachricht den designierten Ausgangsport der zeitgesteuerten Nachricht belegt.

Weiters vorteilhafte Ausgestaltungen des erfindungsgemäßen Verfahrens und der erfindungsgemäßen Verteilereinheit sind die folgenden:
*) die LLVME sendet den *Pauseframe* zum *Pauseframesendezeitpunkt* an die HLVME, wobei der *Pauseframesendezeitpunkt* sich errechnet aus dem geplanten Sendezeitpunkt der zeitgesteuerten Nachricht minus dem implementierungsabhängigen, insbesondere a priori bekannten, *Aktivierungsjitter;* und/oder
*) die Dauer der mittels des *Pauseframe* angeforderten Pause wird durch die Summe des *Aktivierungsjitters* plus der, insbesondere a priori bekannten, maximalen Übertragungsdauer der zeitgesteuerten Nachricht bestimmt; und/ oder
*) eine Kopie einer zeitgesteuerten Nachricht wird von der LLVME zu Monitorzwecken an die HLVME weitergeleitet; und/ oder
^{*}) der *Pauseframe* entspricht in Struktur und Funktion dem IEEE Standard 802.3; und/oder
*) die LLVME sendet den Pauseframe zum *Pauseframesendezeitpunkt* nur dann an die HLVME, wenn zum *Pauseframesendezeitpunkt* ein entsprechender TT Frame in der LLVME eingetroffen ist; und/oder
*) der die zeitgesteuerten Nachrichten betreffende Zeitplan wird mittels eines kryptographisch gesicherten Protokolls in die LLVME geladen; und/oder
*) der in der LLVME gespeicherte Zeitplan wird durch fehlererkennende Codes gesichert; und/ oder
*) der in der LLVME gespeicherte Zeitplan wird durch fehlerkorrigierende Codes gesichert.

Im Folgenden ist Erfindung an Hand der Zeichnung genauer erklärt. Dabei zeigt
Fig. 1 den strukturellen Aufbau der erweiterten Nachrichtenverteilereinheit, und
Fig. 2 den zeitlichen Ablauf Übertragung eines Pauseframes.

Das folgende konkrete Beispiel behandelt eine der vielen möglichen Realisierungen des neuen Verfahrens.

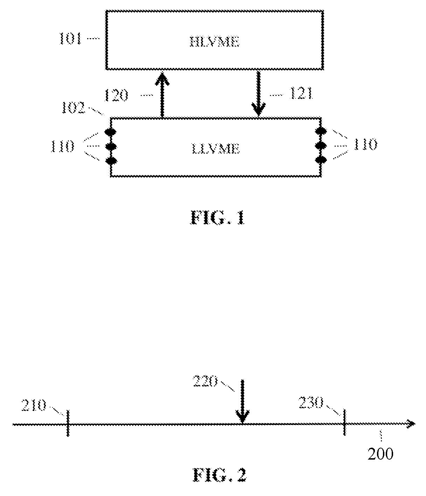

Fig. 1 zeigt eine Nachrichtenverteilereinheit mit der Low-Level Vermittlungseinheit (LLVME) 102 und der High-Level Vermittlungseinheit (HLVME) **101**. Erfindungsgemäß hat die LLVME **102** Zugriff auf die globale Zeit mit bekannter Präzision [4, S.56]. Diese globale Zeit kann entsprechend dem IEEE Standard 1588 oder mit einem anderen herstellerabhängigen Synchronisationsverfahrens aufgebaut werden. Auf den bidirektionalen Kommunikations-Ports **110** der LLVME **102** treffen die zu vermittelnden Nachrichten ein und werden die vermittelten Nachrichten ausgegeben. Unmittelbar nach dem Eintreffen einer Nachricht über einen der Kommunikations-Ports **110** entscheidet die LLVME **102** ob die eintreffende Nachricht eine ET Nachricht oder eine TT Nachricht ist. Diese Entscheidung muss eindeutig sein. Sie kann auf unterschiedlichen Informationen aufbauen. Der einfachste Fall liegt vor, wenn der Inhalt eines dediziertes Nachrichtenfeldes im Header der Nachricht, wie z.B. das Ethernet Type Field [2] angibt, ob die Nachricht eine TT Nachricht oder eine ET Nachricht ist. Es ist aber auch möglich im Rahmen einer Analyse der MAC Adressen, der Port Adressen oder des Zeitpunkts des Eintreffens einer Nachricht, oder dem Inhalt eines dedizierten Nachrichtenfeldes (oder einer Kombination der angeführten Informationen) diese Entscheidung vorzunehmen. Der TT-Ethernet Standard [5] gibt Methoden vor, wie eine zeitgesteuerte Nachricht identifiziert werden kann. Wenn die eintreffende Nachricht eine ET Nachricht ist, wird sie über den leistungsfähigen Kommunikationskanal **120** an die HLVME zur Bearbeitung weitergeben. Die HLVME entscheidet unter Berücksichtigung der Nachrichtenart und des vorhandenen Verkehrsaufkommen, wann diese Nachricht über den leistungsfähigen Kommunikationskanal **121** an die LLVME übergeben wird, damit die LLVME die Nachricht über die designierte Port-Adresse **110** ausgeben kann. Die HLVME kann auch Monitorfunktionen ausführen, um Informationen über Verkehrsaufkommen, Auslastung der Kommunikationskanäle und eventuellen Fehlern zu sammeln.

Wenn die LLVME **102** eine Nachricht als zeitgesteuert klassifiziert, dann wird die Nachricht entsprechend dem in der LLVME gespeicherten Zeitplan zum geplanten Ausgabezeitpunkt direkt von der LLVME an den designierten Kommunikations-Port der LLVME ausgebeben. Der Zeitplan muss vor der Vermittlung von zeitgesteuerten Nachrichten in die LLVME geladen werden. Um sicherzustellen, dass der Zeitplan von einer autorisierten Instanz unverfälscht übernommen wurde, kann das Laden eines neuen Zeitplans mittels kryptographische Protokolle gesichert werden. Die Speicherung des Zeitplans kann innerhalb der LLVME durch fehlererkennende oder fehlerkorrigierende Codes gesichert werden.

Um sicherzustellen, dass zum Zeitpunkt der Ausgabe einer zeitgesteuerten Nachricht über den designierten Kommunikations-Port der LLVME 102 keine ereignisgesteuerte Nachricht diesen designierten Kommunikations-Port belegt, muss die LLVME *rechtzeitig* vor dem Senden einer zeitgesteuerten Nachricht mittels eines *Pauseframes* eine Pause von der HLVME anfordern. Ein solcher *Pauseframe* ist im IEEE Standard 802.3 standardisiert worden.

Fig. 2 stellt den zeitlichen Ablauf der Übertragung des Pauseframes dar, um die Rechtzeitigkeit der Pause zu gewährleisten. Auf der Abszisse **200** von Fig. 2 ist das Fortschreiten der Zeit dargestellt. Entsprechend dem in der LLVME gespeicherten Zeitplan soll zum *a priori* bekannten Zeitpunkt **230** mit dem Senden der zeitgesteuerten Nachricht von der LLVME über den designierten Ausgangsport **110** begonnen werden. Zu diesem Zeitpunkt muss der designierte Ausgangsport der LLVME für die Übertragung der zeitgesteuerten Nachricht frei sein. Wir bezeichnen die Summe aus Übertragungszeit des Pauseframes von der LLVME an die HLVME plus die maximale Verarbeitungszeit des Pauseframes in der HLVME plus die Dauer der längsten am designierten Ausgangsport zu übertragenden ET Nachricht als *Aktivierungsjitter* des Pauseframes. Die Rechtzeitigkeit des Sendens des Pauseframes von der LLVME an die HLVME ist gegeben, wenn das Intervall zwischen dem *Pauseframesendezeitpunkt* **210** und dem designierten Sendezeitpunkt **230** der zeitgesteuerten Nachricht dem *Aktivierungsjitter* entspricht.

Bei einer zeitgesteuerten Schedule mit einem geringen Spiel *(laxity)* kann der in Fig. 2 dargestellte Fall eintreten, dass die zeitgesteuerte Nachricht erst zum Zeitpunkt **220** bei der LLVME eintrifft. Aufgrund der im Zeitplan der LLVME gespeicherten Information und der der LLVME bekannten Dauer des Aktivierungsjitter muss die LLVME schon vor diesem Eintreffen **220** der zeitgesteuerten Nachricht bei der LLVME die Pause zum *Pauseframesendezeitpunkt* **210** von der HLVME anfordern.

Alternativ kann das Spiel in der zeitgesteuerten Schedule so erweitert werden, dass erst nach Eintreffen der Nachricht bei der LLVME der Pauseframe gesendet werden muss. Dies hat den Vorteil, dass wenn keine zeitgesteuerte Nachricht eintrifft auch keine Pause angefordert werden muss.

Die in dem Pauseframe enthaltene Dauer der Pause muss so gewählt werden, dass die längste zu übertragende zeitgesteuerte Nachricht vor dem Ende der Pause übertragen worden ist. Erfindungsgemäß kann der *Pauseframe* in Struktur und Funktion dem IEEE Standard 802.3 entsprechen

Wenn auch zeitgesteuerte Nachrichten in die Monitorfunktionen einbezogen werden sollen, so werden von der LLVME auch die zeitgesteuerten Nachrichten an die HLVME gesendet. Nachdem die HLVME eine zeitgesteuerte Nachricht analysiert hat (um die gewünschten Monitorinformationen zu erheben), verwirft die HLVME die zeitgesteuerte Nachricht.

Das beschriebene Verfahren zur Integration von zeitgesteuerten und ereignisgesteuerten Nachrichten kann vorzugsweise in der Software auf einer CPU, als Logik in einem FPGA Baustein oder als eigenständiger ASIC Baustein realisiert werden.

Die vorliegende Erfindung legt somit offen, wie eine bestehende Nachrichtenverteilereinheit für ereignisgesteuerte Nachrichten (z.B. für Ethernet Nachrichten) erweitert werden kann, um auch zeitgesteuerte Nachrichten zu vermitteln. Erfindungsgemäß wird der bestehenden Nachrichtenverteilereinheit eine Low-Level Vermittlungseinheit vorgeschaltet, die die Vermittlung der zeitgesteuerten Nachrichten vornimmt und sicherstellt, dass zum *a priori* geplanten Sendezeitpunkt der zeitgesteuerten Nachricht keine ereignisgesteuerte Nachricht den designierten Ausgangsport der zeitgesteuerten Nachricht belegt.

### Zitierte Literatur:

[1] US 5,694,542 Kopetz, H. *Time-triggered communication control unit and communication method.* Granted December 2,1997.
[2] US 7,839,868. Kopetz, H. *Communication method and system for the transmission of time-driven and event-driven Ethernet messages.* Granted November 23, 2010.
[3] US 2007/0083622 Wang et al. *Ethernet Switch and Service Processing Method thereof.* Pub. Date April 12, 2007.
[4] Kopetz, H. Real-Time Systems, Design Principles for Distributed Embedded Applications. Springer Verlag. 2011.
[5] SAE Standard AS6802 von TT Ethernet. URL: http://standards.sae.org/as6802
[6] IEEE 802.3 *Ethernet Standard.* URL: http://www.ieee802.org/3/
[7] IEEE 1588 *Standard for a Precision Clock Synchronization Protocol for Network Measurement and Control Systems.* URL: http://www.ieee1588.com/

## Patentansprüche

1. Verfahren zur Verteilung von ereignisgesteuerten, ET-, und zeitgesteuerten, TT- , Nachrichten in einem verteilten Echtzeitsystem mittels einer Verteilereinheit, die eine Low-Level Vermittlungseinheit, LLVME, und eine High-Level Vermittlungseinheit, HVLME, beinhaltet, wobei Kommunikations-Ports der Verteilereinheit zu anderen Vermittlungseinheiten und/oder Endsystemen des Echtzeitsystems an die LLVME angeschlossen sind,
**dadurch gekennzeichnet, dass**
die LLVME über den Zugriff auf eine globale Zeitbasis verfügt und dazu eingerichtet ist, zwischen ET-Nachrichten und TT-Nachrichten zu unterscheiden, wobei die LLVME eine auf einem ihrer Ports eintreffende ET-Nachricht an die HLVME weiter leitet, so dass die HLVME die Analyse und zeitliche Einplanung der ET-Nachricht vornehmen kann, bevor sie diese ET-Nachricht wieder an die LLVME zur Ausgabe an die designierten Ausgangsports der LLVME übergibt, und wobei die LLVME, insbesondere rechtzeitig, vor der ihr bekannten Ausgabe einer TT-Nachricht einen *Pauseframe* an die HLVME sendet, so dass während des für die TT-Nachricht vorab bekannten und eingeplanten Sendeslot von der HLVME die Übertragung keiner ET-Nachricht eingeplant wird, und wobei die LLVME eine eintreffende TT-Nachricht entsprechend dem ihr bekannten Zeitplan direkt zur Ausgabe an die designierten Ausgangsports übergibt.

2. Verfahren nach Anspruch 1, **dadurch gekennzeichnet, dass** die LLVME den *Pauseframe* zum *Pauseframesendezeitpunkt* an die HLVME sendet, wobei der *Pauseframesendezeitpunkt* sich errechnet aus dem geplanten Sendezeitpunkt der zeitgesteuerten Nachricht minus dem implementierungsabhängigen, insbesondere a priori bekannten, *Aktivierungsjitter.*

3. Verfahren nach Anspruch 1 oder 2, **dadurch gekennzeichnet, dass** die Dauer der mittels des *Pauseframe* angeforderten Pause bestimmt wird durch die Summe des *Aktivierungsjitters* plus der, insbesondere a priori bekannten, maximalen Übertragungsdauer der zeitgesteuerten Nachricht.

4. Verfahren nach einem der Ansprüche 1 bis 3, **dadurch gekennzeichnet, dass** eine Kopie einer zeitgesteuerten Nachricht von der LLVME zu Monitorzwecken an die HLVME weitergeleitet wird.

5. Verfahren nach einem der Ansprüche 1 bis 4, **dadurch gekennzeichnet, dass** der *Pauseframe* in Struktur und Funktion dem IEEE Standard 802.3 entspricht.

6. Verfahren nach einem der Ansprüche 1 bis 5, **dadurch gekennzeichnet, dass** die LLVME den Pauseframe zum *Pauseframesendezeitpunkt* nur dann an die HLVME sendet, wenn zum *Pauseframesendezeitpunkt* ein entsprechender TT Frame in der LLVME eingetroffen ist.

7. Verfahren nach einem der Ansprüche 1 bis 6, **dadurch gekennzeichnet, dass** der die zeitgesteuerten Nachrichten betreffende Zeitplan mittels eines kryptographisch gesicherten Protokolls in die LLVME geladen wird.

8. Verfahren nach einem der Ansprüche 1 bis 7, **dadurch gekennzeichnet, dass** der in der LLVME gespeicherte Zeitplan durch fehlererkennende Codes gesichert wird.

9. Verfahren nach einem der Ansprüche 1 bis 8, **dadurch gekennzeichnet, dass** der in der LLVME gespeicherte Zeitplan durch fehlerkorrigierende Codes gesichert wird.

10. Verteilereinheit zur Verteilung von ereignisgesteuerten, ET-, und zeitgesteuerten, TT-, Nachrichten in einem verteilten Echtzeitsystem, wobei die Verteilereinheit eine Low-Level Vermittlungseinheit, LLVME, und eine High-Level Vermittlungseinheit, HLVME, beinhaltet, wobei Kommunikations-Ports der Verteilereinheit zu anderen Vermittlungseinheiten und/oder Endsystemen des Echtzeitsystems an die LLVME angeschlossen sind,
**dadurch gekennzeichnet, dass**
die LLVME über den Zugriff auf eine globale Zeitbasis verfügt und dazu eingerichtet ist, zwischen ET-Nachrichten und TT-Nachrichten zu unterscheiden, wobei die LLVME eine auf einem ihrer Ports eintreffende ET-Nachricht an die HLVME weiter leitet, so dass die HLVME die Analyse und zeitliche Einplanung der ET-Nachricht vornehmen kann, bevor sie diese ET-Nachricht wieder an die LLVME zur Ausgabe an die designierten Ausgangsports der LLVME übergibt, und wobei die LLVME, insbesondere rechtzeitig, vor der ihr bekannten Ausgabe einer TT-Nachricht einen *Pauseframe* an die HLVME sendet, so dass während des für die TT-Nachricht vorab bekannten und eingeplanten Sendeslot von der HLVME die Übertragung keiner ET-Nachricht eingeplant wird, und wobei die LLVME eine eintreffende TT-Nachricht entsprechend dem ihr bekannten Zeitplan direkt zur Ausgabe an die designierten Ausgangsports übergibt.

11. Verteilereinheit nach Anspruch 10, **dadurch gekennzeichnet, dass** die LLVME den *Pauseframe* zum *Pauseframesendezeitpunkt* an die HLVME sendet, wobei der *Pauseframesendezeitpunkt* sich errechnet aus dem geplanten Sendezeitpunkt der zeitgesteuerten Nachricht minus dem implementierungsabhängigen, insbesondere a priori bekannten, *Aktivierungsjitter.*

12. Verteilereinheit nach Anspruch 10 oder 11, **dadurch gekennzeichnet, dass** die Dauer der mittels des *Pauseframe* angeforderten Pause bestimmt wird durch die Summe des *Aktivieruvgsjitters* plus der, insbesondere a priori bekannten, maximalen Übertragungsdauer der zeitgesteuerten Nachricht.

13. Verteilereinheit nach einem der Ansprüche 10 bis 12, **dadurch gekennzeichnet, dass** eine Kopie einer zeitgesteuerten Nachricht von der LLVME zu Monitorzwecken an die HLVME weitergeleitet wird.

14. Verteilereinheit nach einem der Ansprüche 10 bis 13, **dadurch gekennzeichnet, dass** der *Pauseframe* in Struktur und Funktion dem IEEE Standard 802.3 entspricht.

15. Verteilereinheit nach einem der Ansprüche 10 bis 14, **dadurch gekennzeichnet, dass**
die LLVME den Pauseframe zum *Pauseframesendezeitpunkt* nur dann an die HLVME sendet, wenn zum *Pauseframesendezeitpunkt* ein entsprechender TT Frame in der LLVME eingetroffen ist.

16. Verteilereinheit nach einem der Ansprüche 10 bis 15, **dadurch gekennzeichnet, dass** der die zeitgesteuerten Nachrichten betreffende Zeitplan mittels eines kryptographisch gesicherten Protokolls in die LLVME geladen wird.

17. Verteilereinheit nach einem der Ansprüche 10 bis 16, **dadurch gekennzeichnet, dass** der in der LLVME gespeicherte Zeitplan durch fehlererkennende Codes gesichert wird.

18. Verteilereinheit nach einem der Ansprüche 10 bis 17, **dadurch gekennzeichnet, dass** der in der LLVME gespeicherte Zeitplan durch fehlerkorrigierende Codes gesichert wird.

19. Verteiltes Echtzeitsystem mit zumindest einer Verteilereinheit nach einem der Ansprüche 10 bis 18.

## Claims

1. A method for distributing event-triggered, ET-, and time-triggered, TT-, messages in a distributed real-time system by means of a distributor unit that comprises a low-level relay unit, LLVME, and a high-level relay unit, HLVME, wherein communication ports of the distributor unit to other relay units and/or end systems of the real-time system are attached to the LLVME,
**characterized in that**
the LLVME has access to a global time base and is configured to differentiate between ET messages and TT messages, wherein the LLVME forwards an ET message that is incoming at one of its ports to the HLVME such that the HLVME can carry out the analysis and temporal scheduling of said ET message before it delivers this ET message back to the LLVME for issue at the designated output ports of the LLVME, and, prior to the known issuing of a TT message, in particular in a timely manner, the LLVME transmits a *pause frame* to the HLVME such that no ET message is scheduled to be transmitted by the HLVME during this anticipated and scheduled TT message transmission slot, and wherein the LLVME delivers an incoming TT message directly for issue at the designated output ports in accordance with the known time plan.

2. The method according to claim 1, **characterized in that** the LLVME transmits the *pause frame* to the HLVME at the *pause frame transmission time,* wherein the *pause frame transmission time* is determined from the planned transmission time of the time-triggered message minus the implementation-dependent *activation jitter,* which is known *a priori,* in particular.

3. The method according to claim 1 or 2, **characterized in that** the duration of the pause called for by means of the *pause frame* is determined by the sum of the *activation jitter* plus the maximum transmission time of the time-triggered message, which is known *a priori,* in particular.

4. The method according to any one of the claims 1 to 3, **characterized in that** a copy of a time-triggered message is forwarded by the LLVME to the HLVME for monitoring purposes.

5. The method according to any one of the claims 1 to 4, **characterized in that** the structure and function of the *pause frame* correspond to the IEEE Standard 802.3.

6. The method according to any one of the claims 1 to 5, **characterized in that** the LLVME transmits the pause frame to the HLVME at the *pause frame transmission time* only if a corresponding TT frame has arrived in the LLVME at the *pause frame transmission time.*

7. The method according to any one of the claims 1 to 6, **characterized in that** the time plan applicable to the time-triggered messages is loaded into the LLVME by means of a cryptographically secured protocol.

8. The method according to any one of the claims 1 to 7, **characterized in that** the time plan stored in the LLVME is secured by error-detecting codes.

9. The method according to any one of the claims 1 to 8, **characterized in that** the time plan stored in the LLVME is secured by error-correcting codes.

10. A distributor unit for distributing event-triggered, ET-, and time-triggered, TT-, messages in a distributed real-time system, wherein the distributor unit comprises a low-level relay unit, LLVME, and a high-level relay unit, HLVME, wherein communication ports of the distributor unit to other relay units and/or end systems of the real-time system are attached to the LLVME,
**characterized in that**
the LLVME has access to a global time base and is configured to differentiate between ET messages and TT messages, wherein the LLVME forwards an ET message that is incoming at one of its ports to the HLVME such that the HLVME can carry out the analysis and temporal scheduling of said ET message before it delivers this ET message back to the LLVME for issue at the designated output ports of the LLVME, and, prior to the known issuing of a TT message, in particular in a timely manner, the LLVME transmits a *pause frame* to the HLVME such that no ET message is scheduled to be transmitted by the HLVME during this anticipated and scheduled TT message transmission slot, and wherein the LLVME delivers an incoming TT message directly for issue at the designated output ports in accordance with the known time plan.

11. The distributor unit according to claim 10, **characterized in that** the LLVME transmits the *pause frame* to the HLVME at the *pause frame transmission time,* wherein the *pause frame transmission time* is determined from the planned transmission time of the time-triggered message minus the implementation-dependent *activation jitter,* which is known *a priori,* in particular.

12. The distributor unit according to claim 10 or 11, **characterized in that** the duration of the pause called for by means of the *pause frame* is determined by the sum of the *activation jitter* plus the maximum transmission time of the time-triggered message, which is known *a priori,* in particular.

13. The distributor unit according to any one of the claims 10 to 12, **characterized in that** a copy of a time-triggered message is forwarded by the LLVME to the HLVME for monitoring purposes.

14. The distributor unit according to any one of the claims 10 to 13, **characterized in that** the structure and function of the *pause frame* correspond to the IEEE Standard 802.3.

15. The distributor unit according to any one of the claims 10 to 14, **characterized in that** the LLVME transmits the pause frame to the HLVME at the *pause frame transmission time* only if a corresponding TT frame has arrived in the LLVME at the *pause frame transmission time.*

16. The distributor unit according to any one of the claims 10 to 15, **characterized in that** the time plan applicable to the time-triggered messages is loaded into the LLVME by means of a cryptographically secured protocol.

17. The distributor unit according to any one of the claims 10 to 16, **characterized in that** the time plan stored in the LLVME is secured by error-detecting codes.

18. The distributor unit according to any one of the claims 10 to 17, **characterized in that** the time plan stored in the LLVME is secured by error-correcting codes.

19. A distributed real-time system comprising at least one distributor unit according to any one of the claims 10 to 18.

## Revendications

1. Procédé pour la distribution de messages déclenchés par événement, ET, et déclenchés en temps, TT, dans un système en temps réel distribué au moyen d'une unité de distribution qui comporte une unité de commutation de bas niveau, LLVME, et une unité de commutation de haut niveau, HVLME, des ports de communication de l'unité de distribution vers d'autres unités de commutation et/ou systèmes terminaux du système en temps réel étant raccordés à la LLVME,
**caractérisé par le fait que**
la LLVME dispose de l'accès à une base de temps globale et est conçue pour faire la distinction entre des messages ET et des messages TT, la LLVME transmettant à la HLVME un message ET arrivant sur l'un de ses ports, de telle sorte que la HLVME peut réaliser l'analyse et la planification temporelle du message ET avant qu'elle ne transmette à nouveau ce message ET à la LLVME pour une émission aux ports de sortie désignés de la LLVME, et la LLVME envoyant une *trame de pause* à la HLVME, en particulier au moment opportun, avant l'émission d'un message TT connue de celle-ci, de telle sorte qu'aucun transfert de message ET n'est planifié par la HLVME pendant le créneau d'envoi connu au préalable et planifié pour le message TT, et la LLVME transmettant un message TT entrant, conformément au schéma temporel connu de celle-ci, directement pour l'émission aux ports de sortie désignés.

2. Procédé selon la revendication 1, **caractérisé par le fait que** la LLVME envoie la *trame de pause* à la HLVME au *moment d'émission de la trame de pause,* le *moment d'émission de la trame de pause* se calculant à partir du moment d'émission planifié du message déclenché en temps moins la *gigue d'activation,* en particulier a priori connue, indépendante de la mise en oeuvre.

3. Procédé selon l'une des revendications 1 ou 2, **caractérisé par le fait que** la durée de la pause demandée au moyen de la *trame de pause* est déterminée par la somme de la *gigue d'activation* plus la durée de transmission maximale, en particulier a priori connue, du message déclenché en temps.

4. Procédé selon l'une des revendications 1 à 3,
**caractérisé par le fait qu'**une copie d'un message déclenché en temps est redirigée de la LLVME à la HLVME à des fins de surveillance.

5. Procédé selon l'une des revendications 1 à 4,
**caractérisé par le fait que** la *trame de pause* correspond en structure et fonction à la norme IEEE 802.3.

6. Procédé selon l'une des revendications 1 à 5,
**caractérisé par le fait que** la LLVME transmet alors la *trame* de *pause* au *moment d'émission de la trame de pause* à la HLVME seulement lorsqu'une trame TT correspondante est arrivée dans la LLVME au *moment d'émission de la trame de pause.*

7. Procédé selon l'une des revendications 1 à 6,
**caractérisé par le fait que** le schéma temporel concernant les messages déclenchés en temps est chargé dans la LLVME au moyen d'un protocole sécurisé par cryptographie.

8. Procédé selon l'une des revendications 1 à 7,
**caractérisé par le fait que** le schéma temporel stocké dans la LLVME est garanti par des codes détecteurs d'erreurs.

9. Procédé selon l'une des revendications 1 à 8,
**caractérisé par le fait que** le schéma temporel stocké dans la LLVME est garanti par des codes correcteurs d'erreurs.

10. Unité de distribution pour la distribution de messages déclenchés par événement, ET, et déclenchés en temps, TT, dans un système en temps réel distribué, l'unité de distribution comportant une unité de commutation de bas niveau, LLVME, et une unité de commutation de haut niveau, HLVME, des ports de communication de l'unité de distribution vers d'autres unités de commutation et/ou systèmes terminaux du système en temps réel étant raccordés à la LLVME,
**caractérisée par le fait que**
la LLVME dispose de l'accès à une base de temps globale et est conçue pour faire la distinction entre des messages ET et des messages TT, la LLVME transmettant à la HLVME un message ET arrivant sur l'un de ses ports, de telle sorte que la HLVME peut réaliser l'analyse et la planification temporelle du message ET avant qu'elle ne transmette à nouveau ce message ET à la LLVME pour une émission aux ports de sortie désignés de la LLVME, et la LLVME envoyant une *trame de pause* à la HLVME, en particulier au moment opportun, avant l'émission d'un message TT connue de celle-ci, de telle sorte qu'aucun transfert de message ET n'est planifié par la HLVME pendant le créneau d'envoi connu au préalable et planifié pour le message TT, et la LLVME transmettant un message TT entrant, conformément au schéma temporel connu de celle-ci, directement pour l'émission aux ports de sortie désignés.

11. Unité de distribution selon la revendication 10, **caractérisée par le fait que** la LLVME envoie la *trame de pause* à la HLVME au *moment d'émission de la trame de pause,* le *moment d'émission de la trame de pause* se calculant à partir du moment d'émission planifié du message déclenché en temps moins la *gigue d'activation,* en particulier a priori connue, indépendante de la mise en oeuvre.

12. Unité de distribution selon l'une des revendications 10 ou 11, **caractérisée par le fait que** la durée de la pause demandée au moyen la *trame de pause* est déterminée par la somme de la *gigue d'activation* plus la durée de transmission maximale, en particulier a priori connue, du message déclenché en temps.

13. Unité de distribution selon l'une des revendications 10 à 12, **caractérisée par le fait qu'**une copie d'un message déclenché en temps est redirigée de la LLVME à la HLVME à des fins de surveillance.

14. Unité de distribution selon l'une des revendications 10 à 13, **caractérisée par le fait que** la *trame de pause* correspond en structure et fonction à la norme IEEE 802.3.

15. Unité de distribution selon l'une des revendications 10 à 14, **caractérisée par le fait que** la LLVME transmet alors la trame de pause au *moment d'émission de la trame de pause* à la HLVME seulement lorsqu'une trame TT correspondante est arrivée dans la LLVME au *moment d'émission de la trame de pause.*

16. Unité de distribution selon l'une des revendications 10 à 15, **caractérisée par le fait que** le schéma temporel concernant les messages déclenchés en temps est chargé dans la LLVME au moyen d'un protocole sécurisé par cryptographie.

17. Unité de distribution selon l'une des revendications 10 à 16, **caractérisée par le fait que** le schéma temporel stocké dans la LLVME est garanti par des codes détecteurs d'erreurs.

18. Unité de distribution selon l'une des revendications 10 à 17, **caractérisée par le fait que** le schéma temporel stocké dans la LLVME est garanti par des codes correcteurs d'erreurs.

19. Système en temps réel distribué comportant au moins une unité de distribution selon l'une des revendications 10 à 18.
